# EUROPEAN PATENT APPLICATION

(11) **EP 4 349 696 A1**
(43) Date of publication of application: **10.04.2024**
(21) Application number: 22199614.3
(22) Date of filing: 04.10.2022
(51) Int. Cl.: B62D 35/00

(54) **MECHANICAL AIR DEFLECTOR DEVICE FOR A VEHILCE**

(71) Applicant: Volvo Car Corporation, 405 31 Göteborg (SE)
(72) Inventor: BENGTSSON, Anders, 40531 Göteborg (SE); JOHANSSON, Tobias, 40531 Göteborg (SE); BRESNER, John, 40531 Göteborg (SE); SHARMA, Utpal, 40531 Göteborg (SE); NGUYEN, Leo, 40531 Götebog (SE)
(74) Representative: Maiwald GmbH

(57) **Abstract**

Air deflector device for a vehicle, comprising: an air deflector portion (12) configured to deflect an air flow occurring due to a movement of the vehicle (30), whereby the air deflector portion (12) is further configured to be moved between a closed position and an opened position, whereby the air flow occurring due to a movement of the vehicle (30) is pushing the air deflector portion (12) from its opened position in its closed position; a locking mechanism (20) configured to be moved between an unlocked position and a locked position; and/or a mounting mechanism (16) comprising a force element configured to apply a force pushing the air deflector portion (12) from its opened position in its closed position; and an actuation mechanism (14) configured to push the air deflector portion (12) from its closed position in its opened position.

## Description

### TECHNICAL FIELD

The present disclosure relates to an air deflector device for a vehicle with an air deflector portion and a locking mechanism, an air deflector device with an air deflector portion, a mounting mechanism and a actuation mechanism and/or a vehicle having at least an air deflector device.

### BACKGROUND ART

Known air deflectors are in a fixed position attached to a vehicle or be attached to vary its position moved by actuators like a motor. Therefore, fixed air deflectors do not generate the best aerodynamic performance due to other demands of the vehicle like ground clearance at low speed, so that the fixed air deflector may not cover all needed areas of the vehicle and/or have to use e.g. soft material for the fixed air deflector to gain an optimal aerodynamic performance. Moreover, moveable actuators moved by actuators are cost intensive and need a controlling of the actuator which may lead to failures by using the vehicle.

In view of this, it is found that a further need exists to provide an improved air deflector device for a vehicle.

### SUMMARY

In the view of the above, it is an object of the present disclosure to provide an air deflector device for a vehicle.

The problem is at least partially solved or alleviated by the subject matter of the independent claims of the present disclosure, whereby further examples are incorporated in the dependent claims.

According to a first aspect, an air deflector device for a vehicle, comprising:
an air deflector portion configured to deflect an air flow occurring due to a movement of the vehicle, whereby the air deflector portion is further configured to be moved between a closed position and an opened position, whereby the air flow occurring due to a movement of the vehicle is pushing the air deflector portion from its opened position in its closed position;
a locking mechanism configured to be moved between an unlocked position and a locked position, whereby in its locked position, the locking mechanism is further configured to lock the air deflector portion in its opened position.

The air deflector portion may be an element that is more long than wide or more wide than long. Furthermore, the thickness of the element may vary depending on the field of application and/or vehicle in which the air deflector is used.

Furthermore, the air deflection portion may be mounted on one side of the air deflection portion and comprise an element corresponding to the locking mechanism on a second side opposite the first side. Moreover, the locking mechanism may be configured to engage with the element corresponding to the locking mechanism.

The air flow occurring due to the movement of the vehicle may push against at least one side of the air deflector portion and move the air deflector portion from its opened position to its closed position.

The locking mechanism may be an element that, in particular if engaged with the element corresponding to the locking mechanism, locks the movement of the air deflector portion.

In addition, the locking mechanism may unlock the movement of the air deflection portion after it has been locked.

In other words, an air deflector device may be attached to an underfloor of the vehicle. A mounting e.g. a hinge in front of the air deflector device provides freedom to move the air deflector portion between its opened position and its closed positon. Alternatively and/or additionally a spring element may push the air deflector device in its opened position.

In an implementation, the locking mechanism may be moved from its unlocked position into its locked position based on an air flow occurring due to a movement of the vehicle.

In other words, the air flow occurring due to a movement of the vehicle may be led into an area on top of the air deflector device to put pressure and/or push the locking mechanism to lock the air deflector portion in its opened position at higher speed.

In an implementation, the locking mechanism may be configured to be moved from its unlocked position into its locked position if the movement speed of the vehicle may be higher than a predetermined value of 70 km/h or 50 km/h, preferably higher than 40 km/h.

Thereby, the speed of movement of the vehicle may affect the airflow occurring due to a movement of the vehicle, in order that the airflow may vary based on the speed of the vehicle.

In an implementation, the air deflector device may further comprise a force element configured to apply a force pushing the locking mechanism in its unlocked position.

The force element may be configured to build up a force between two elements to move the two elements against each other, whereby the force element may comprise a spring element.

In an implementation, the force element may be configured to move the locking mechanism in its unlocked position, if the movement speed of the vehicle may be lower than a predetermined value of 70 km/h or 50 km/h, preferably higher than 40 km/h.

The force element may be configured in a way that, when the speed decreases below a certain value, the air flow occurring due to a movement of the vehicle is insufficient and the locking mechanism is moved into its unlocked position.

In other words, at low speeds the locking mechanism is not engaged with the air deflector portion, in order that the air deflector portion may move into its closed position.

A further aspect of the present disclosure relates to an air deflector device for a vehicle, comprising:
an air deflector portion configured to deflect an air flow occurring due to a movement of the vehicle, whereby the air deflector portion is further configured to be moved between a closed position and an opened position;
a mounting mechanism comprising a force element configured to apply a force pushing the air deflector portion from its opened position in its closed position; and
an actuation mechanism configured to push the air deflector portion from its closed position in its opened position based on an air flow occurring during a movement of the vehicle.

The air deflector portion may be an element that is longer than wide or more wide than long. Furthermore, the thickness of the element may vary depending on the field of application and/or vehicle in which the air deflector is used.

Furthermore, the air deflector portion may comprise a guiding element to guide the movement of the air deflector portion between its opened position and its closed position.

The mounting mechanism may be configured to mount the air deflector device to the vehicle, whereby the mounting mechanism may be configured to rotatably mounting the air deflector device to the vehicle.

The actuation mechanism may be configured to be pushed by the air flow occurring during a movement of the vehicle. Furthermore, the actuation mechanism may be at least on one side of the air deflector portion.

In other words, by using forces that occur naturally due to the movement of the vehicle e.g. wind speed the air deflector device may be mechanical activated and provide an aerodynamic performance to the vehicle.

In an implementation, the actuation mechanism may be configured to move the air deflector portion from its closed position into its opened position if the movement speed of the vehicle may be higher than a predetermined value of 70 km/h or 50 km/h, preferably higher than 40 km/h.

Thereby, the speed of movement of the vehicle may affect the airflow occurring due to a movement of the vehicle, in order that the airflow may vary based on the speed of the vehicle.

In other words, the air deflector device may be controlled by drag forces created by the movement of the vehicle at higher speeds. At lower speed, the air deflector would not be activated thus allowing the car to have a higher ground clearance to avoid obstacles.

In an implementation, the actuation mechanism and/or the locking mechanism may comprise at least one impact surface for an air flow occurring due to the movement of the vehicle.

The impact surface may be arranged in a way that, the air flow occurring due to the movement of the vehicle is provide to the impact surface. Moreover, the arrangement of the impact surface may be varied to provide a needed air flow occurring due to the movement of the vehicle.

In an implementation, the air deflector device may further comprise at least one inflow channel configured to guide an air flow occurring due to the movement of the vehicle to the locking mechanism or the actuation mechanism, whereby the air flow is preferably guided to the at least one impact surface of the locking mechanism or the actuation mechanism.

The inflow channel may be configured to guide the air flow from an outside of the vehicle to the locking mechanism or the actuation mechanism, preferably the inflow channel may be arrangement in a way that, the air flow is lead in the inflow channel while moving the vehicle.

In an implementation, the air deflector device may further comprise at least one inflow channel and a dynamic pressure element, whereby the at least one inflow channel is configured to guide an air flow occurring due to the movement of the vehicle to the dynamic pressure element and the dynamic pressure element is configured to change its size between an empty size and a full size based on an air volume of the air flow occurring due to the movement of the vehicle, whereby in its full size, the dynamic pressure element is further configured to apply a force to push the air deflector portion from its closed position in its opened position.

The dynamic pressure element may comprise any element which is able to filled and/or store air in its inside, whereby the volume of the air may changes the size of the dynamic pressure element. Therefore, the dynamic pressure element may be an element which is variable in its size, for example a balloon.

In an implementation, the inflow channel may be configured to be arranged in a part attached to the body of the vehicle, preferably in at least one bumper of the vehicle, at least one sill molding of the vehicle and/or at least one wheel arch liner of the vehicle.

For example, the inflow channel may be arranged in the at least one bumper if the air deflector device is arranged in front of the vehicle, whereby the inflow channel may be arranged in front of at least one wheel of the vehicle. Further, the inflow channel may be arranged in the at least one sill molding if the air deflector device is arranged in rear of the vehicle.

In an implementation, the air deflector device may be configured to be mounted under the vehicle, preferably in a front and/or rear of the vehicle.

The air deflector device may be mounted by a hinge element for rotatably mounting the air deflector device with a lock mechanism and/or the air deflector device to the vehicle.

In other words, the air deflector device may be attached to the underfloor of the vehicle. A hinge in front may provide freedom to move the air deflector portion between its closed position and its opened position. Thereby, the movement into the opened position may be activated by air pressure from the movement of the vehicle. Therefore, the air may be lead into an area in a front of the wheel to put pressure on the air deflector device to push it into its opened position and steering the air flow outside of the wheels. The air deflector device may be spring loaded, so that it returns to its original position when the car slows down and the air pressure is decreasing.

In an implementation, the force element may be configured as a spring element to provide the force.

A further aspect of the present disclosure relates to a vehicle having at least one disclosed air deflector device.

### BRIEF DESCRIPTION OF DRAWINGS

In the following, the disclosure is described exemplarily with reference to the enclosed figures, in which:
- **Fig. 1**: is a schematic illustration of a first view of a first example of an air deflector device for a vehicle;
- **Fig. 2**: is a schematic illustration of a second view of the first example of an air deflector device for a vehicle of Fig. 1;
- **Fig. 3**: is a schematic illustration of a first view of a second example of an air deflector device for a vehicle;
- **Fig. 4**: is a schematic illustration of a second of the second example of the air deflector device for a vehicle of Fig. 3;
- **Fig. 5**: is a schematic illustration of a first view of a third example of an air deflector device for a vehicle;
- **Fig. 6**: is a schematic illustration of a second view of the third example of the air deflector device for a vehicle of Fig. 5;
- **Fig. 7**: is a schematic illustration of a first view of a fourth example of an air deflector device for a vehicle;
- **Fig. 8**: is a schematic illustration of a second view of a fourth example of an air deflector device for a vehicle of Fig. 7;
- **Fig. 9**: is a schematic illustration of a first view of a fifth example of an air deflector device for a vehicle; and
- **Fig. 10**: is a schematic illustration of a second view of a fifth example of an air deflector device for a vehicle of Fig. 9.

Notably, the figures are merely schematic representations and serve only to illustrate examples of the present disclosure. Identical or equivalent elements are in principle provided with the same reference signs.

### DETAILED DESCRIPTION

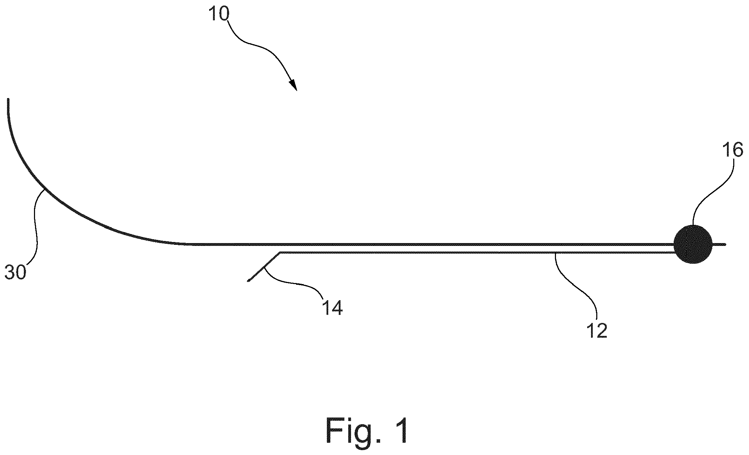

**Fig. 1** shows a schematic illustration of a first view of a first example of an air deflector device 10 for a vehicle 30, whereby the air deflector device 10 comprising:
an air deflector portion 12 configured to deflect an air flow occurring due to a movement of the vehicle 30, whereby the air deflector portion 12 is further configured to be moved between a closed position and an opened position;
a mounting mechanism 16 comprising a force element configured to apply a force pushing the air deflector portion 12 from its opened position in its closed position; and
an actuation mechanism 14 configured to push the air deflector portion 12 from its closed position in its opened position based on an air flow occurring during a movement of the vehicle 30.

Hereby the **Fig. 1** shows the air deflector portion 12 in its closed position.

Furthermore, the actuation mechanism 14 comprise at least one impact surface for an air flow occurring due to the movement of the vehicle, whereby the impact surface is at the opposite side of the air deflector portion 12 of the mounting mechanism 16.

Furthermore, the air deflector device 10 is configured to be mounted under the vehicle 30, preferably in a front and/or rear of the vehicle 30. Moreover, the mounting mechanism 16 comprise a hinge element for rotatably mounting the air deflector device 10 to the vehicle 30.

Furthermore, the force element is configured as a spring element to provide the force.

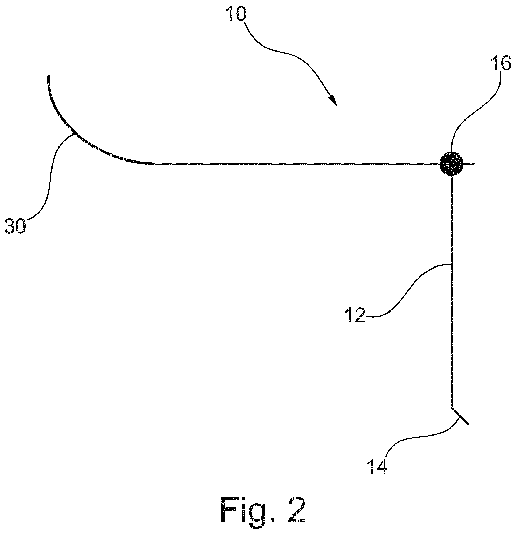

**Fig. 2** shows a schematic illustration of a second view of the first example of the air deflector device 10 for a vehicle 30 of **Fig. 1**, hereby the **Fig. 2** shows the air deflector portion 12 in its opened position.

In other words, the air deflector portion 12 fixed on its first side to the underfloor of the vehicle 30. Thereby, the fixing is spring loaded to force the air deflector portion 12 to lay parallel to the underfloor. On the second side, opposite to the first side, the actuation mechanism 14 is arranged to catch air at high speeds of the vehicle 30 to force the air deflector portion to deploy around its spring load and move in its opened positon. Once returning to lower speeds the spring will again return the air deflector portion to its closed position.

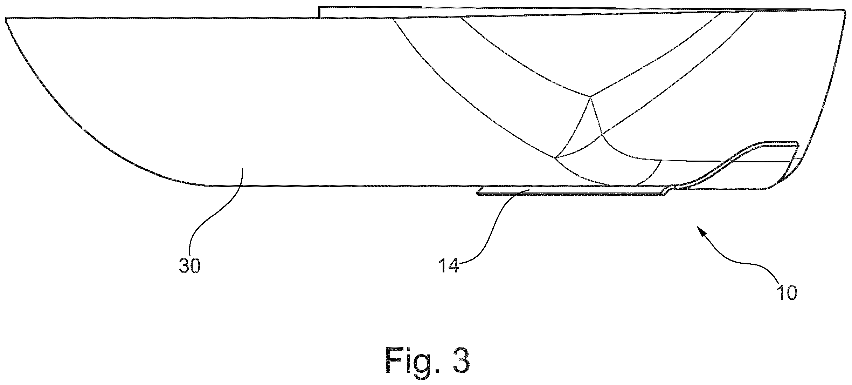

**Fig. 3** shows a schematic illustration of a first view of a second example of an air deflector device 10 for a vehicle 30, whereby the air deflector device 10 comprising:
an air deflector portion 12 configured to deflect an air flow occurring due to a movement of the vehicle 30, whereby the air deflector portion 12 is further configured to be moved between a closed position and an opened position;
a mounting mechanism 16 (not shown) comprising a force element configured to apply a force pushing the air deflector portion 12 from its opened position in its closed position; and
an actuation mechanism 14 configured to push the air deflector portion 12 from its closed position in its opened position based on an air flow occurring during a movement of the vehicle 30.

Hereby the **Fig. 3** shows the air deflector portion 12 in its closed position.

Furthermore, the actuation mechanism 14 comprise at least one impact surface for an air flow occurring due to the movement of the vehicle, whereby the impact surface is at the opposite side of the air deflector portion 12 of the mounting mechanism 16 (not shown).

Furthermore, the air deflector device 10 is configured to be mounted under the vehicle 30, preferably in a front and/or rear of the vehicle 30. Moreover, the mounting mechanism 16 (not shown) comprise a hinge element for rotatably mounting the air deflector device 10 to the vehicle 30.

Furthermore, the force element is configured as a spring element to provide the force.

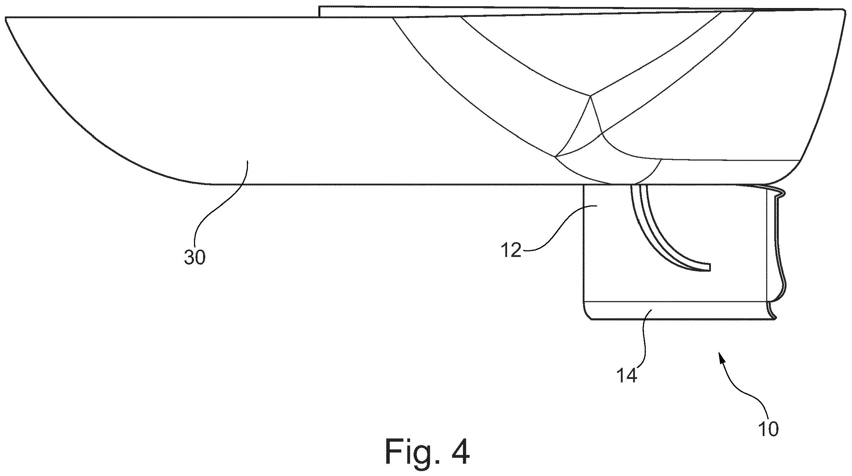

**Fig. 4** shows a schematic illustration of a second of the second example of the air deflector device 10 for a vehicle 30 of **Fig. 3**, hereby the **Fig. 4** shows the air deflector portion 12 in its opened position.

Furthermore, the air deflector device 10 comprise a guiding element to guide the movement of the air deflector portion 12 between its closed position and its opened position.

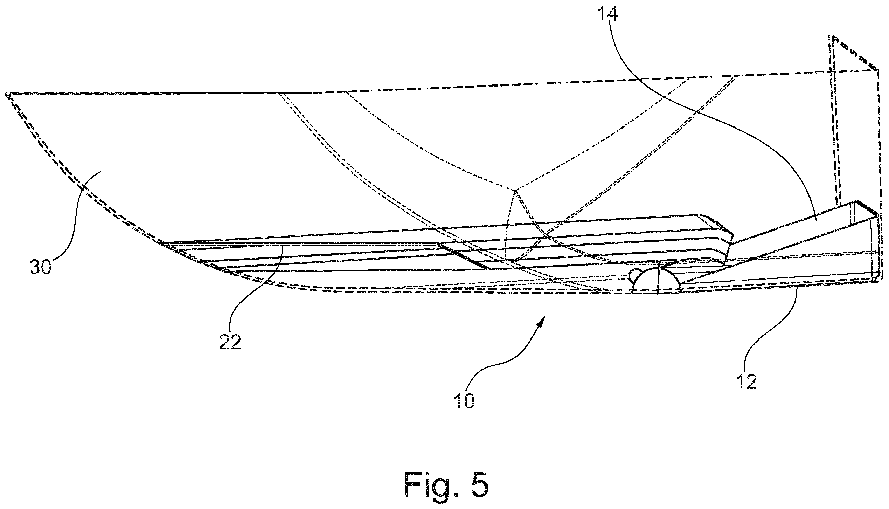

**Fig. 5** shows a schematic illustration of a first view of a third example of an air deflector device 10 for a vehicle 30, whereby the air deflector device 10 comprising:
an air deflector portion 12 configured to deflect an air flow occurring due to a movement of the vehicle 30, whereby the air deflector portion 12 is further configured to be moved between a closed position and an opened position;
a mounting mechanism 16 (not shown) comprising a force element configured to apply a force pushing the air deflector portion 12 from its opened position in its closed position; and
an actuation mechanism 14 configured to push the air deflector portion 12 from its closed position in its opened position based on an air flow occurring during a movement of the vehicle 30.

Hereby the **Fig. 5** shows the air deflector portion 12 in its closed position, whereby the air deflector portion 12 is housed inside the vehicle 30 in its closed position.

Furthermore, the actuation mechanism 14 comprise at least one impact surface for an air flow occurring due to the movement of the vehicle 30.

Furthermore, the air deflector device 10 is configured to be mounted to the vehicle 30, preferably in a front and/or rear of the vehicle 30. Moreover, the mounting mechanism 16 (not shown) comprise a hinge element for rotatably mounting the air deflector device 10 to the vehicle 30.

Furthermore, the force element is configured as a spring element to provide the force.

Furthermore, the air deflector device further comprise one inflow channel 22 configured to guide an air flow occurring due to the movement of the vehicle 30 to the actuation mechanism 14, whereby the air flow is preferably guided to the at least one impact surface of the actuation mechanism 14.

Moreover, the inflow channel 22 is configured to be arranged in a part attached to the body of the vehicle 30, preferably in at least one bumper of the vehicle 30.

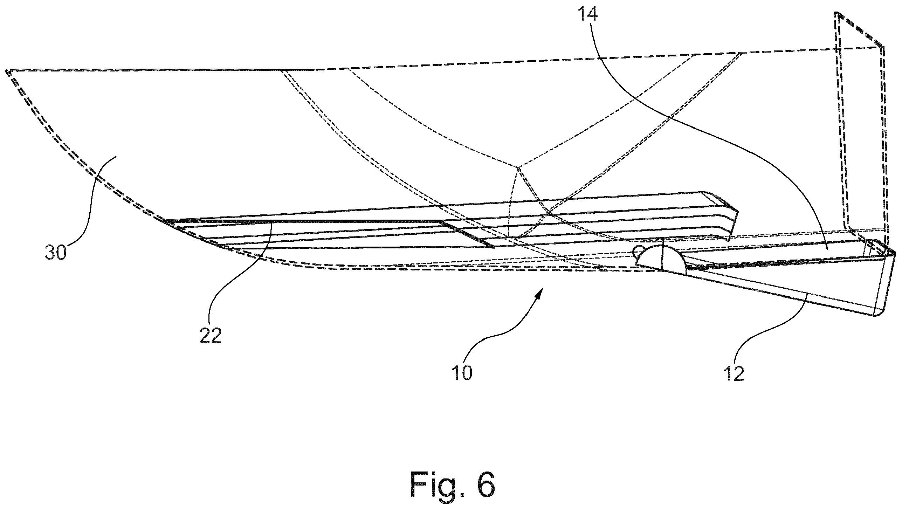

**Fig. 6** shows a schematic illustration of a second view of the third example of the air deflector device for a vehicle of **Fig. 5**, hereby the **Fig. 6** shows the air deflector portion 12 in its opened position, whereby the air deflector portion 12 is outside of the vehicle 30 in its opened position.

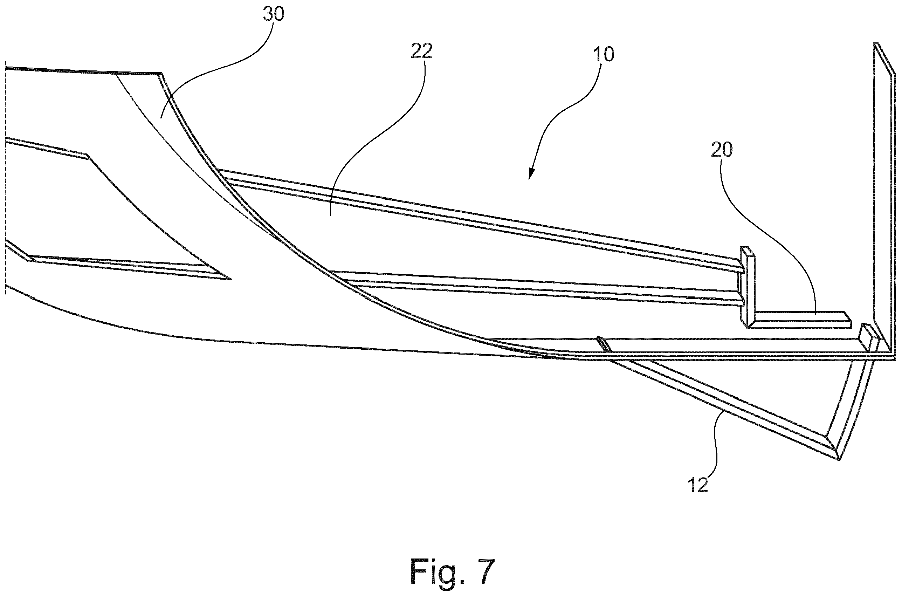

**Fig. 7** shows a schematic illustration of a first view of a fourth example of an air deflector device 10 for a vehicle 30 comprise:
an air deflector portion 12 configured to deflect an air flow occurring due to a movement of the vehicle 30, whereby the air deflector portion 12 is further configured to be moved between a closed position and an opened position, whereby the airflow occurring due to a movement of the vehicle 30 is pushing the air deflector portion 12 from its opened position in its closed position;
a locking mechanism 20 configured to be moved between an unlocked position and a locked position, whereby in its locked position, the locking mechanism 20 is further configured to lock the air deflector portion 12 in its opened position.

Furthermore, the locking mechanism 20 is moved from its unlocked position into its locked position based on an air flow occurring due to a movement of the vehicle 30.

Furthermore, the air deflector device 10 further comprise a force element configured to apply a force pushing the locking mechanism 20 in its unlocked position.

Hereby the **Fig. 7** shows the locking mechanism 20 in its unlocked position and the air deflector portion 12 in its opened position, whereby the air deflector portion is able to be moved by the air flow occurring due to the movement of the vehicle 30 into its closed positon and/or also by any obstacle encountered on the road.

Furthermore, the locking mechanism 20 comprise at least one impact surface for an air flow occurring due to the movement of the vehicle.

Furthermore, the air deflector device 10 is configured to be mounted under the vehicle 30, preferably in a front and/or rear of the vehicle 30. Moreover, the air deflector device 10 comprise a hinge element for rotatably mounting the air deflector device 10 to the vehicle 30.

Furthermore, the air deflector device further comprise one inflow channel 22 configured to guide an air flow occurring due to the movement of the vehicle 30 to the locking mechanism 20, whereby the air flow is preferably guided to the at least one impact surface of the locking mechanism 20 and/or the actuation mechanism 14.

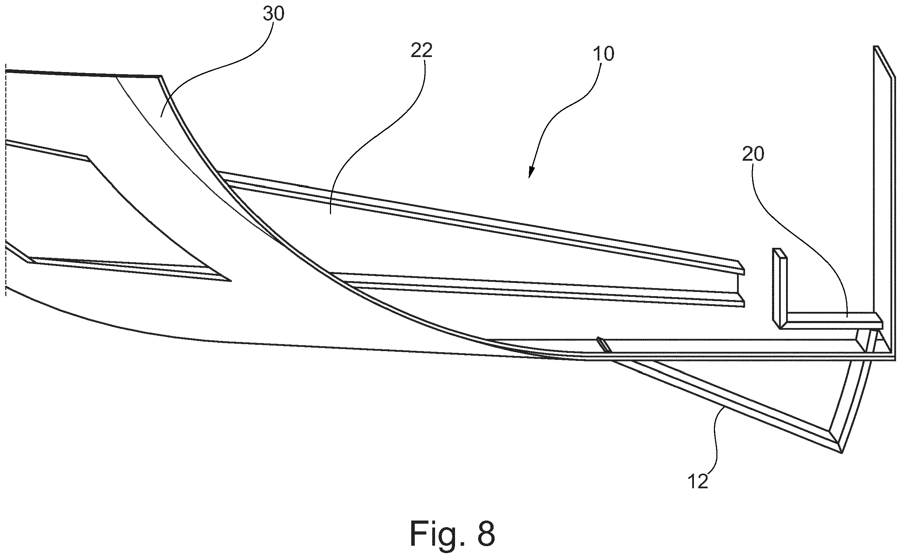

**Fig. 8** shows a schematic illustration of a second view of a fourth example of an air deflector device for a vehicle of **Fig. 7**, hereby the **Fig. 8** the locking mechanism 20 in its locked position and the air deflector portion 12 in its opened position, whereby the air deflector portion is unable to be moved by the air flow occurring due to the movement of the vehicle 30 into its closed positon.

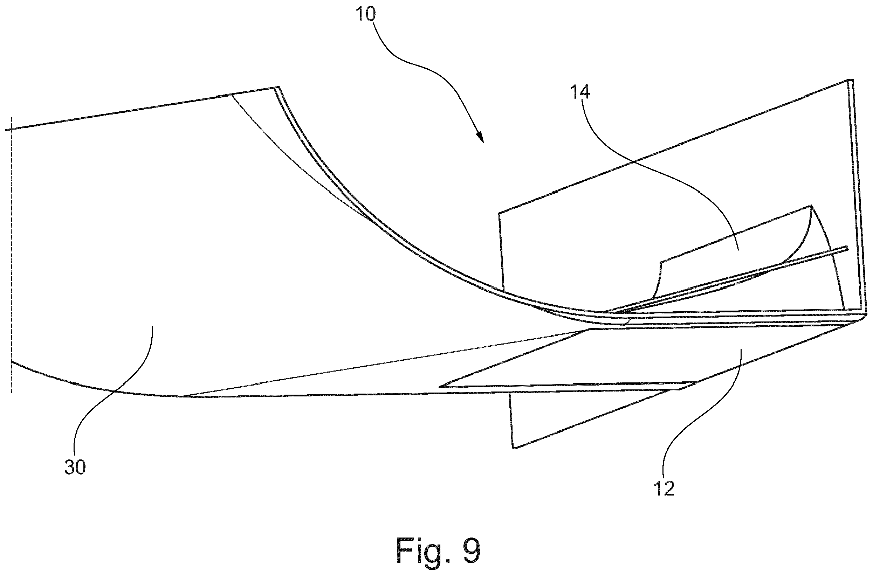

**Fig. 9** shows a schematic illustration of a first view of a fifth example of an air deflector device 10 for a vehicle 30, whereby the air deflector device 10 comprising:
an air deflector portion 12 configured to deflect an air flow occurring due to a movement of the vehicle 30, whereby the air deflector portion 12 is further configured to be moved between a closed position and an opened position;
a mounting mechanism 16 (not shown) comprising a force element configured to apply a force pushing the air deflector portion 12 from its opened position in its closed position; and
an actuation mechanism 14 configured to push the air deflector portion 12 from its closed position in its opened position based on an air flow occurring during a movement of the vehicle 30.

Hereby the **Fig. 9** shows the air deflector portion 12 in its closed position, whereby the air deflector portion 12 is housed inside the vehicle 30 in its closed position.

Furthermore, the actuation mechanism 14 comprise at least one impact surface for an air flow occurring due to the movement of the vehicle.

Furthermore, the air deflector device 10 is configured to be mounted to the vehicle 30, preferably in a front and/or rear of the vehicle 30. Moreover, the mounting mechanism 16 (not shown) comprise a hinge element for rotatably mounting the air deflector device 10 to the vehicle 30.

Furthermore, the force element is configured as a spring element to provide the force.

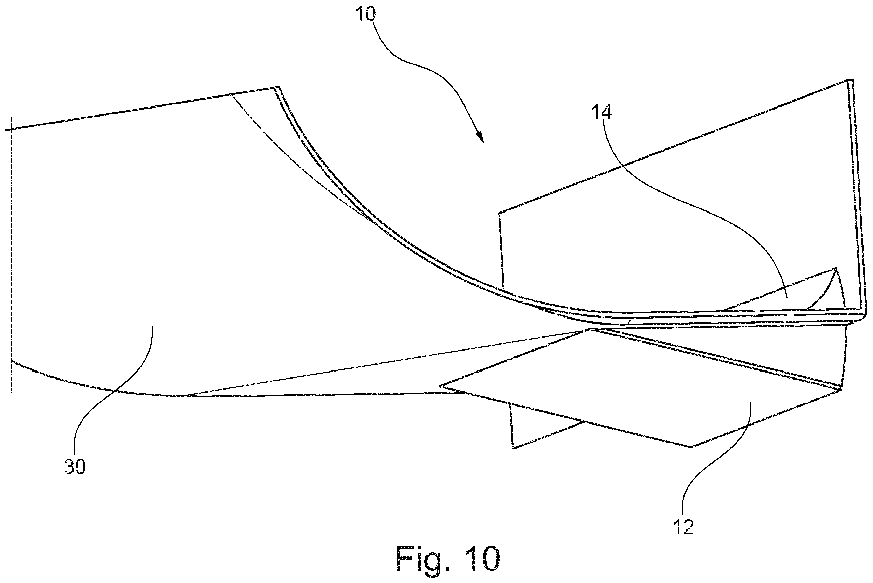

**Fig. 10** shows a schematic illustration of a second view of a fifth example of an air deflector device for a vehicle of **Fig. 9**, hereby the **Fig. 10** shows the air deflector portion 12 in its opened position, whereby the air deflector portion 12 is outside of the vehicle 30 in its opened position.

Other variations to the disclosed examples may be understood and effected by those skilled in the art in practicing the claimed subject matter, from the study of the figures, the disclosure, and the appended claims. In particular, respective parts/functions of the respective example described above may also be combined with each other. In particular, the present disclosure is not limited to specific modules, vehicle functions, user interfaces, user interface areas/fields and/or communication methods. In the claims, the word "comprising" does not exclude other elements or steps and the indefinite article "a" or "an" does not exclude a plurality. The mere fact that certain measures are recited in mutually different dependent claims does not indicate that a combination of these measures may not be used to advantage. Any reference signs in the claims should not be construed as limiting the scope of the claims.

### LIST OF REFERENCE SIGNS

- 10: Air deflector device
- 12: Air deflector portion
- 14: Actuation mechanism
- 16: Mounting mechanism
- 20: Locking mechanism
- 22: Inflow channel
- 30: Vehicle

## Claims

1. Air deflector device for a vehicle, comprising:
an air deflector portion (12) configured to deflect an air flow occurring due to a movement of the vehicle (30), whereby the air deflector portion (12) is further configured to be moved between a closed position and an opened position, whereby the air flow occurring due to a movement of the vehicle (30) is pushing the air deflector portion (12) from its opened position in its closed position;
a locking mechanism (20) configured to be moved between an unlocked position and a locked position, whereby in its locked position, the locking mechanism (20) is further configured to lock the air deflector portion (12) in its opened position.

2. Air deflector device according claim 1, whereby the locking mechanism (20) is moved from its unlocked position into its locked position based on an air flow occurring due to a movement of the vehicle (30).

3. Air deflector device according to claim 1 or claim 2, whereby the locking mechanism (20) is configured to be moved from its unlocked position into its locked position if the movement speed of the vehicle (30) is higher than a predetermined value of 70 km/h or 50 km/h, preferably higher than 40 km/h.

4. Air deflector device according to any one of the preceding claims, whereby the air deflector device (10) is further comprising a force element configured to apply a force pushing the locking mechanism (20) in its unlocked position.

5. Air deflector device according to claim 4, whereby the force element is configured to move the locking mechanism (20) in its unlocked position, if the movement speed of the vehicle (30) is lower than a predetermined value of 70 km/h or 50 km/h, preferably higher than 40 km/h.

6. Air deflector device for a vehicle, comprising:
an air deflector portion (12) configured to deflect an air flow occurring due to a movement of the vehicle (30), whereby the air deflector portion (12) is further configured to be moved between a closed position and an opened position;
a mounting mechanism (16) comprising a force element configured to apply a force pushing the air deflector portion (12) from its opened position in its closed position; and
an actuation mechanism (14) configured to push the air deflector portion (12) from its closed position in its opened position based on an air flow occurring during a movement of the vehicle (30).

7. Air deflector device according to claim 6, whereby the actuation mechanism (16) is configured to move the air deflector portion (12) from its closed position into its opened position if the movement speed of the vehicle (30) is higher than a predetermined value of 70 km/h or 50 km/h, preferably higher than 40 km/h.

8. Air deflector device according to any one of the preceding claims, whereby the actuation mechanism (14) and/or the locking mechanism (20) comprise at least one impact surface for an air flow occurring due to the movement of the vehicle (30).

9. Air deflector device according to any one of the preceding claims, further comprising at least one inflow channel (22) configured to guide an air flow occurring due to the movement of the vehicle (30) to the locking mechanism (20) or the actuation mechanism (14), whereby the air flow is preferably guided to the at least one impact surface of the locking mechanism (20) or the actuation mechanism (14).

10. Air deflector device according to any one of the claims 6, further comprising at least one inflow channel (22) and a dynamic pressure element, whereby the at least one inflow channel (22) is configured to guide an air flow occurring due to the movement of the vehicle to the dynamic pressure element and the dynamic pressure element is configured to change its size between an empty size and a full size based on an air volume of the air flow occurring due to the movement of the vehicle (30), whereby in its full size, the dynamic pressure element is further configured to apply a force to push the air deflector portion (12) from its closed position in its opened position.

11. Air deflector device according to claim 9, whereby the at least one inflow channel (22) is configured to be arranged in a part attached to the body of the vehicle (30), preferably in at least one bumper of the vehicle (30), at least one sill molding of the vehicle (30) and/or at least one wheel arch liner of the vehicle (30).

12. Air deflector device according to any one of the preceding claims whereby the air deflector device (10) is configured to be mounted under the vehicle (30), preferably in a front and/or rear of the vehicle (30).

13. Air deflector device according to any one of the preceding claims, whereby the force element is configured as a spring element to provide the force.

14. Vehicle having at least one air deflector device according to any one of the claims 1 to 13.

## Amended claims

### Amended claims in accordance with Rule 137(2) EPC.

1. Air deflector device for a vehicle, comprising:
an air deflector portion (12) configured to deflect an air flow occurring due to a movement of the vehicle (30), whereby the air deflector portion (12) is further configured to be moved between a closed position and an opened position, whereby the air flow occurring due to a movement of the vehicle (30) is pushing the air deflector portion (12) from its opened position in its closed position;
a locking mechanism (20) configured to be moved between an unlocked position and a locked position, whereby in its locked position, the locking mechanism (20) is further configured to lock the air deflector portion (12) in its opened position,
**characterized in that** the locking mechanism (20) is moved from its unlocked position into its locked position based on an air flow occurring due to a movement of the vehicle (30).

2. Air deflector device according to claim 1, whereby the locking mechanism (20) is configured to be moved from its unlocked position into its locked position if the movement speed of the vehicle (30) is higher than a predetermined value of 70 km/h or 50 km/h, preferably higher than 40 km/h.

3. Air deflector device according to any one of the preceding claims, whereby the air deflector device (10) is further comprising a force element configured to apply a force pushing the locking mechanism (20) in its unlocked position.

4. Air deflector device according to claim 3, whereby the force element is configured to move the locking mechanism (20) in its unlocked position, if the movement speed of the vehicle (30) is lower than a predetermined value of 70 km/h or 50 km/h, preferably higher than 40 km/h.

5. Air deflector device according to any one of the preceding claims, whereby the locking mechanism (20) comprises at least one impact surface for an air flow occurring due to the movement of the vehicle (30).

6. Air deflector device according to any one of the preceding claims, further comprising at least one inflow channel (22) configured to guide an air flow occurring due to the movement of the vehicle (30) to the locking mechanism (20), whereby the air flow is preferably guided to the at least one impact surface of the locking mechanism (20).

7. Air deflector device for a vehicle, comprising:
an air deflector portion (12) configured to deflect an air flow occurring due to a movement of the vehicle (30), whereby the air deflector portion (12) is further configured to be moved between a closed position and an opened position;
a mounting mechanism (16) comprising a force element configured to apply a force pushing the air deflector portion (12) from its opened position in its closed position;
an actuation mechanism (14) configured to push the air deflector portion (12) from its closed position in its opened position based on an air flow occurring during a movement of the vehicle (30); and
at least one inflow channel (22) and a dynamic pressure element, whereby the at least one inflow channel (22) is configured to guide an air flow occurring due to the movement of the vehicle to the dynamic pressure element and the dynamic pressure element is configured to change its size between an empty size and a full size based on an air volume of the air flow occurring due to the movement of the vehicle (30), whereby in its full size, the dynamic pressure element is further configured to apply a force to push the air deflector portion (12) from its closed position in its opened position.

8. Air deflector device according to claim 7, whereby the actuation mechanism (16) is configured to move the air deflector portion (12) from its closed position into its opened position if the movement speed of the vehicle (30) is higher than a predetermined value of 70 km/h or 50 km/h, preferably higher than 40 km/h.

9. Air deflector device according to claims 7 or 8, whereby the actuation mechanism (14) comprises at least one impact surface for an air flow occurring due to the movement of the vehicle (30).

10. Air deflector device according to any one of claims 7 to 9, further comprising at least one inflow channel (22) configured to guide an air flow occurring due to the movement of the vehicle (30) to the actuation mechanism (14), whereby the air flow is preferably guided to the at least one impact surface of the actuation mechanism (14).

11. Air deflector device according to claim 10, whereby the at least one inflow channel (22) is configured to be arranged in a part attached to the body of the vehicle (30), preferably in at least one bumper of the vehicle (30), at least one sill molding of the vehicle (30) and/or at least one wheel arch liner of the vehicle (30).

12. Air deflector device according to any one of the preceding claims whereby the air deflector device (10) is configured to be mounted under the vehicle (30), preferably in a front or rear of the vehicle (30).

13. Air deflector device according to any one of claims 3 to 12, whereby the force element is configured as a spring element to provide the force.

14. Vehicle having at least one air deflector device according to any one of the claims 1 to 13.
